# EUROPÄISCHE PATENTANMELDUNG

(11) **EP 2 846 112 A1**
(43) Veröffentlichungstag der Anmeldung: **11.03.2015**
(21) Anmeldenummer: 14182984.6
(22) Anmeldetag: 01.09.2014
(51) Int. Cl.: F25B 1/10, F25B 31/00, F25B 30/00, F25B 30/02

(54) **Wärmepumpenvorrichtung**

(30) Priorität: 03.09.2013 DE 102013014542
(71) Anmelder: Stiebel Eltron GmbH & Co. KG, 37603 Holzminden (DE)
(72) Erfinder: Holle, Björn, 37603 Holzminden (DE)

(57) **Zusammenfassung**

Die vorliegende Erfindung betrifft eine Wärmepumpenvorrichtung mit einem ersten Kompressor und einem zweiten Kompressor, die durch ein Leitungssegment derart in Reihe verbunden sind, dass die Kompression eine Zwei-Stufen-Kompression ist, falls der erste Kompressor und der zweite Kompressor betrieben werden, einem Kondensator, einem Verdampfer, einem Expansionsventil, das in der Strömungsrichtung vor dem Verdampfer angeordnet ist, einem ersten Ölabscheider, der in Strömungsrichtung hinter dem ersten Kompressor angeordnet und mit dem ersten Kompressor über eine erste Ölleitung verbunden ist, um abgeschiedenes Öl zu dem ersten Kompressor zurückzuführen, und einem zweiten Ölabscheider, der in Strömungsrichtung hinter dem zweiten Kompressor angeordnet und mit dem zweiten Kompressor über eine zweite Ölleitung verbunden ist, um abgeschiedenes Öl zu dem zweiten Kompressor zurückzuführen. Wenigstens der erste Kompressor oder der zweite Kompressor kann unabhängig betrieben werden. Der nicht betriebene erste Kompressor oder der nicht betriebene zweite Kompressor kann durch eine erste Umgehungsleitung oder eine zweite Umgehungsleitung überbrückt werden. Dem zweiten Kompressor ist ein Absperrventil in Strömungsrichtung vorgeschaltet.

## Beschreibung

Seit geraumer Zeit sind Vorrichtungen wie beispielsweise Klimaanlagen, Kühlschränke und dergleichen bekannt, die eine so genannte Kältemaschine aufweisen. Eine Kältemaschine dient der Kälteerzeugung, indem sie einen thermodynamischen Kreisprozess umsetzt, bei dem Wärme unterhalb der Umgebungstemperatur aufgenommen und bei höherer Temperatur abgegeben wird.

In vergleichbarer Weise sind Wärmepumpen bekannt, die unter Aufwendung von technischer Arbeit thermische Energie aus einem Reservoir mit niedrigerer Temperatur wie beispielsweise der Umgebung aufnimmt und zusammen mit der Antriebsenergie als Nutzwärme auf ein zu beheizendes System mit höherer Temperatur wie beispielsweise eine Raumheizung überträgt.

Sowohl Kältemaschinen als auch Wärmepumpen verwenden dabei grundsätzlich das gleiche Prinzip, nämlich dass die verwendeten Fluide bei unterschiedlichen Drücken unterschiedliche Siede- bzw. Kondensationstemperaturen aufweisen und dass sich diese Fluide bei der Entspannung (Drosselung) abkühlen. Beispielsweise werden Wärmepumpen in der Regel mit Fluiden betrieben, die bei niedrigem Druck unter Wärmezufuhr verdampfen und nach der Verdichtung auf einen höheren Druck unter Wärmeabgabe wieder kondensieren. Die Drücke werden so gewählt, dass die Temperaturen des Phasenwechsels einen für die Wärmeübertragung ausreichenden Abstand zu den Temperaturen der Wärmequelle bzw. Wärmesenke haben.

Aus EP 2 487 437 A1 ist eine Wärmepumpenvorrichtung mit einem Kältekreis, einem ersten Kompressor und einem zweiten Kompressor, die durch ein Leitungssegment derart in Reihe verbunden sind, dass die Kompression eine Zwei-Stufen-Kompression ist, falls der erste Kompressor und der zweite Kompressor betrieben werden, bekannt. Die Wärmepumpenvorrichtung weist einen Kondensator, einen Verdampfer und ein Expansionsventil, in der Strömungsrichtung vor dem Verdampfer, auf. Weiterhin ist ein erster Ölabscheider vorgesehen, der in Strömungsrichtung hinter dem ersten Kompressor angeordnet und mit dem ersten Kompressor über eine erste Ölleitung verbunden ist, um abgeschiedenes Öl zu dem ersten Kompressor zurückzuführen und ein zweiter Ölabscheider vorgesehen, der in Strömungsrichtung hinter dem zweiten Kompressor angeordnet und mit dem zweiten Kompressor über eine zweite Ölleitung verbunden ist, um abgeschiedenes Öl zu dem zweiten Kompressor zurückzuführen. Wenigstens der erste Kompressor oder der zweite Kompressor können unabhängig betrieben werden, wobei der nicht betriebene erste Kompressor oder der nicht betriebene zweite Kompressor durch eine erste Umgehungsleitung oder eine zweite Umgehungsleitung überbrückt werden kann, und wobei dem zweiten Kompressor ein Absperrventil in Strömungsrichtung vorgeschaltet ist.

Aufgabe der vorliegenden Erfindung ist es, eine Wärmepumpenvorrichtung vorzusehen, bei der eine hohe Heizleistung bei Übergangswitterungsbedingungen sowie auch bei niedrigen Außentemperaturen erreicht wird und ein möglichst großer Einsatzbereich abgedeckt ist.

Erfindungsgemäß wird die Aufgabe durch ein Verfahren zum Betrieb einer Wärmepumpenvorrichtung mit den Verfahrensschritten nach Anspruch 1 gelöst. Vorteilhafte Weiterbildungen sind in den Unteransprüchen beschrieben.

Somit wird ein Verfahren zum Betrieb einer Wärmepumpenvorrichtung mit einer Umschaltung von wenigstens zwei Betriebsarten vorgeschlagen. In der ersten Betriebsart arbeitet ein erster drehzahlvariabler Kompressor mit einem zweiten drehzahlvariablen Kompressor in einer Zwei-Stufen-Kompression in Serie. Dabei strömt ein Massenstrom des Kältemittels durch beide Kompressoren. In der zweiten Betriebsart wird ein drehzahlvariabler Kompressor in einer einstufigen Kompression unabhängig betrieben, wobei der nicht betriebene drehzahlvariable Kompressor über eine Umgehungsleitung überbrückt ist. Ein Massenstrom des Kältemittels strömt in der zweiten Betriebsart nur durch den mit einer Mindestdrehzahl im Betrieb befindlichen Kompressor. In einer dritten Betriebsart arbeiten die beiden drehzahlvariablen Kompressoren in einem Parallelbetrieb. Beide Kompressoren laufen wenigstens mit einer Mindestdrehzahl, wobei ein Kältemittelmassenstrom in zwei Massenströme aufgeteilt ist. Ein Massenstrom erfolgt durch den ersten drehzahlvariablen Kompressor, der mit einer Drehzahl betrieben wird. Der Massenstrom durch den zweiten drehzahlvariablen Kompressor erfolgt ebenfalls bei einer Drehzahl des zweiten drehzahlvariablen Kompressors. Eine vorgegebene Leistung wird im Parallelbetrieb mit den drehzahlvariablen Kompressoren erreicht.

Vorteilhaft wird zur Umschaltung auf den Parallelbetrieb eine direkte Strömungsverbindung zwischen dem ersten drehzahlvariablen Kompressor und dem zweiten drehzahlvariablen Kompressor mit einer Absperrung unterbrochen. Eine zweite Strömungsverbindung durch die erste Umgehungsleitung ist offen und von einer Saugleitung ist zum zweiten drehzahlgeregelten Kompressor für einen Massenstrom von Kältemittel eine Verbindung hergestellt. Im Parallelbetrieb sind der drehzahlvariable erste Kompressor und der zweite drehzahlvariable Kompressor in Betrieb.

Im Parallelbetrieb ist der gesamte Kältemittelmassenstrom gemäß einem Gedanken der Erfindung vorteilhaft zum ersten und zum zweiten Kompressor aufgeteilt. Ein erster Massenstrom erfolgt durch den ersten Kompressor am zweiten Kompressor vorbei. Ein zweiter Teil-Massenstrom erfolgt am ersten Kompressor vorbei und durch den zweiten Kompressor.

In der dritten Betriebsart ist die Summe der Massenströme durch den Verdampfer größer als der Massenstrom in der zweiten Betriebsart. Die Summe der Massenströme durch den Verdampfer ist in der dritten Betriebsart vorteilhaft größer als der Massenstrom in der ersten Betriebsart, wobei die Heizleistung der Wärmepumpenvorrichtung insbesondere in der dritten Betriebsart höher ist als in der ersten oder zweiten Betriebsart. Vorteilhaft wird nur in der ersten Betriebsart die höchste und maximale Temperatur des Heizmediums erreicht, die in der zweiten oder dritten Betriebsart unter gleichen Bedingungen insbesondere der Außenluft-temperatur nicht erreichbar ist. Die höchste erreichbare Temperatur eines vorlaufenden Heizmediums beträgt insbesondere ca. 70 °C bis 80 °C in der ersten Betriebsart, dem Serienbetrieb der Kompressoren.

Vorteilhaft wird ein Verfahren zum Betrieb einer Wärmepumpenvorrichtung mit einem Kältekreis, mit einem ersten drehzahlvariablen Kompressor und einem zweiten drehzahlvariablen Kompressor vorgeschlagen, die in einer Zwei-Stufen-Kompression arbeiten, falls der erste Kompressor und der zweite Kompressor in Serie betrieben werden. Wenigstens der erste drehzahlvariable Kompressor oder der zweite drehzahlvariable Kompressor kann weiterhin in einer einstufigen Kompression unabhängig betrieben werden, wobei der nicht betriebene erste drehzahlvariable Kompressor oder der nicht betriebene zweite drehzahlvariable Kompressor dann über eine erste Umgehungsleitung oder eine zweite Umgehungsleitung überbrückt wird. Der Massenstrom des Kältemittels erfolgt im Betrieb der einstufigen Verdichtung durch den mit einer Mindestdrehzahl im Betrieb befindlichen Kompressor. In einem Parallelbetrieb laufen der erste und der zweite drehzahivariable Kompressor wenigstens mit einer Mindestdrehzahl. Eine erste Drehzahl für den ersten drehzahlvariablen Kompressor und eine zweite Drehzahl für den zweiten drehzahlvariablen Kompressor ist von einem Regler vorgegeben, so dass eine vorgegebene Leistung der drehzahlvariablen Kompressoren im Parallelbetrieb erreicht wird.

Bei einer tiefen Außentemperatur t_{At} von unter 0 °C, insbesondere unter -5 ° oder noch tiefer, wird die Wärmepumpenvorrichtung somit vorteilhaft im Serienbetrieb betrieben. Die Temperatur t_{At} der Luft, die bei einer Luft-Wasser-Wärmepumpenvorrichtung dem Verdampfer der Wärmepumpenvorrichtung als Umweltenergie zugeführt wird, stellt eine Grenztemperatur dar, bei der die geforderte Temperatur eines Heizmediums, wie einer Vorlauftemperatur eines Heizkreises oder die Ladetemperatur einer Warmwasserbereitung im Parallelbetrieb oder im Einzelbetrieb nicht erreicht werden kann. Spätestens bei oder unterhalb einer Außentemperatur t_{At} wird von einer einstufigen Kompression im Einkompressorbetrieb oder auch Parallelbetrieb auf den Serienbetrieb, insbesondere mit einer Zwischeneinspritzung zwischen dem ersten und dem zweiten Kompressor, umgeschaltet. Die Umschaltung kann auch schon oberhalb der Temperaturen von -5 °C erfolgen. Der Wert t_{At} der Außentemperatur, bei der die Umschaltung erfolgt, ist meist gerätespezifisch und liegt vorzugsweise zwischen 0°C und - 15 °C, insbesondere bei ca. -2, -5, -8, -11 oder-13 °C.

Oberhalb des Wertes von t_{At} der Außentemperatur wird vorteilhaft ein leistungsorientierter Betrieb der Wärmepumpenanlage vorgesehen, also bei Außentemperaturen, die wenigstens oberhalb eines Temperaturbereichs von ca. -25 °C bis 0 °C liegen, wird somit der Einkompressor- oder der Parallelbetrieb gefahren. Dies richtet sich vorteilhaft nach der geforderten Leistung. Reicht die Leistung eines drehzahlgeregelten Kompressors nicht mehr aus, dann wird parallel ein weiterer Kompressor zugeschaltet, wodurch eine Leistungserhöhung erfolgt.

Gemäß einem weiteren Gedanken der Erfindung wird vorgeschlagen, dass zur Umschaltung auf den Parallelbetrieb die direkte Strömungsverbindung zwischen dem ersten drehzahlvariablen Kompressor und dem zweiten drehzahlvariablen Kompressor vorzugsweise mit einer Absperrung unterbrochen wird. Eine zweite Strömungsverbindung ist durch die erste Umgehungsleitung, die dann offen ist, von einer Saugleitung zum zweiten drehzahlgeregelten Kompressor für einen Massenstrom von Kältemittel hergestellt. Im Parallelbetrieb sind der drehzahlvariable erste Kompressor und der zweite drehzahlvariable Kompressor im Betrieb.

Vorteilhaft wird im Parallelbetrieb der gesamte Kältemittelmassenstrom zum ersten und zum zweiten Kompressor aufgeteilt und ein erster Kältemittelmassenteilstrom strömt am ersten Kompressor vorbei und ein zweiter Kältemittelmassenstrom strömt am zweiten Kompressor vorbei.

Die Drehzahlen der Kompressoren sind gemäß einem Aspekt der Erfindung insbesondere im Parallelbetrieb unterschiedlich und zumindest in einem eingefahrenen Betrieb liegt eine zumindest minimale Drehzahlabweichung der Drehzahlen zwischen dem ersten Kompressor und dem zweiten Kompressor vor, die vorzugsweise vom Regler vorgegeben ist. Die Drehzahlabweichung beträgt vorzugsweise mindestens ca. 0,02 - 10 Hz, insbesondere ca.1 Hz.

Nach einem vorteilhaften Verfahrensschritt ist eine Umschaltung zwischen den Betriebsarten nämlich dem Serienbetrieb in der ersten Betriebsart, dem Einkompressorbetrieb in der zweiten Betriebsart und dem Parallelbetrieb in der dritten Betriebsart vorgesehen. Eine Umschaltung vom Einkompressorbetrieb auf den Parallelbetrieb erfolgt insbesondere spätestens dann, wenn eine Heizleistung von der Wärmepumpeneinrichtung gefordert oder eine Temperatur des Heizmediums vorgegeben wird, insbesondere vom Regler angefordert wird, die höher ist, als sie ein Kompressor allein leisten kann. Eine Umschaltung vom Parallelbetrieb auf den Serienbetrieb erfolgt insbesondere spätestens dann, wenn die vom Regler angeforderte Temperatur eine maximal im Parallelbetrieb oder Einzelbetrieb erreichbare Temperatur der Wärmepumpe, wie einer Vorlauftemperatur, überschreitet.

Gemäß einem weiteren Aspekt der Erfindung erfolgt eine Rückschaltung vom Serienbetrieb auf den Parallelbetrieb, vom Serienbetrieb auf den Einzelbetrieb oder vom Parallelbetrieb auf den Einzelbetrieb, wenn insbesondere die angeforderte Temperatur der Wärmepumpe unter einer maximal im Parallelbetrieb oder im Einzelbetrieb erreichbaren Temperatur oder Heizleistung liegt.

In einem vorteilhaften Verfahrensschritt ist die Temperatur der Wärmepumpe eine Heißgastemperatur, eine aus einem Hochdruck ermittelte Heißgastemperatur des Kältemittels in Strömungsrichtung hinter dem ersten drehzahlvariablen Kompressor oder dem zweiten drehzahlvariablen Kompressor und/oder eine Temperatur eines Heizmediums der Wärmepumpe, wie eine Vorlauftemperatur.

Gemäß einem vorteilhaften Gedanken der Erfindung ist der erste drehzahlvariable Kompressor von wenigstens einem ihm zugehörigen ersten Parameter der Wärmepumpe abhängig in der Drehzahl gesteuert. Der zweite drehzahlvariable Kompressor ist vorteilhaft von einem ihm zugehörigen zweiten Parameter oder dem ersten Parameter der Wärmepumpe abhängig in der Drehzahl gesteuert. Weiterhin vorteilhaft sind der erste und der zweite drehzahlvariable Kompressor nur oder zusätzlich von wenigstens einem gemeinsamen Parameter der Wärmepumpe abhängig in der Drehzahl gesteuert.

Weiterhin wird eine entsprechende Wärmepumpenvorrichtung vorgeschlagen, insbesondere unter Verwendung der vorher beschriebenen Verfahrensschritte, bei der eine Umschaltung zwischen den drei Betriebsarten Serienbetrieb, Parallelbetrieb und Einkompressorbetrieb erfolgen kann. Die Wärmepumpenvorrichtung weist einen Kältekreis, einen ersten drehzahlvariablen Kompressor und einen zweiten drehzahlvariablen Kompressor auf, die im Serienbetrieb durch ein Leitungssegment derart in Reihe verbunden sind, dass die Kompression eine Zwei-Stufen-Kompression ist, falls der erste drehzahlvariable Kompressor und der zweite drehzahlvariable Kompressor in Serie betrieben werden. Weiterhin sind ein Kondensator, ein Verdampfer und ein Expansionsventil, das in der Strömungsrichtung vor dem Verdampfer angeordnet ist, vorgesehen. Ein erster Ölabscheider ist in der Strömungsrichtung des Kältemittels hinter dem ersten drehzahlvariablen Kompressor angeordnet und mit dem ersten Kompressor über eine erste Ölleitung verbunden, um abgeschiedenes Öl zu dem ersten Kompressor zurückzuführen. Ein zweiter Ölabscheider ist in Strömungsrichtung des Kältemittels hinter dem zweiten Kompressor angeordnet und mit dem zweiten drehzahlvariablen Kompressor über eine zweite Ölleitung verbunden, um abgeschiedenes Öl zu dem zweiten Kompressor zurückzuführen. Der erste drehzahlvariable Kompressor oder der zweite drehzahlvariable Kompressor können unabhängig betrieben werden, wobei der nicht betriebene erste drehzahlvariable Kompressor oder der nicht betriebene zweite drehzahlvariable Kompressor durch eine erste Umgehungsleitung oder eine zweite Umgehungsleitung überbrückt werden kann. Dem zweiten Kompressor ist ein Absperrventil in der direkten Leitung in Strömungsrichtung vorgeschaltet und die erste Umgehungsleitung ist zwischen dem in der direkten Leitung befindlichen Absperrventil und dem zweiten drehzahlvariablen Kompressor angeschlossen.

Vorteilhaft ist bei dieser Wärmepumpenvorrichtung mit Kältekreis, dass dieser mittels einer Ein-Stufen-Kompression betrieben werden kann, falls lediglich einer der beiden Kompressoren betrieben und der andere überbrückt wird, oder mittels einer Zwei-Stufen-Kompression, falls beide Kompressoren gemeinsam in Serie betrieben werden. Dabei wird in dem Fall, dass der zweite Kompressor in Serie betrieben wird, das Absperrventil angesteuert und damit geöffnet, so dass der zweite Kompressor im Betrieb Fluid ansaugen kann, welches vorher schon durch den ersten Kompressor verdichtet wurde. Wird der zweite Kompressor im Einzelbetrieb bei einer Einstufenkompression nicht betrieben, bleibt das Absperrventil geschlossen, so dass kein Fluid von dem ersten Kompressor in den zweiten Kompressor gedrückt werden kann.

Dabei betrifft die vorliegende Erfindung eine Wärmepumpenvorrichtung mit Kältekreis, vorzugsweise eine Luft-Wasser-Wärmepumpe mit einem Kompressionskältekreis.

Gemäß einem Aspekt der Erfindung ist dem zweiten Kompressor ein Rückschlagventil in Strömungsrichtung nachgeschaltet. Hierdurch kann sichergestellt werden, dass kein Fluid über die zweite Umgehungsleitung in den zweiten Kompressor gelangen kann.

Gemäß einem weiteren Aspekt der Erfindung ist die zweite Umgehungsleitung des zweiten Kompressors derart angeordnet, dass der erste Ölabscheider und der zweite Ölabscheider in Reihe geschaltet sind, falls der erste Kompressor betrieben wird. Auf diese Weise wird der zweite Ölabscheider im Betrieb der Ein-Stufen-Kompression, d.h. falls lediglich nur der erste oder nur der zweite Kompressor betrieben werden, immer durchströmt. Hierdurch kann sich kein Fluid, insbesondere kein Kältemittel oder Öl, über die zweite Umgehungsleitung in den zweiten Kompressor verlagern.

Gemäß einem Aspekt der Erfindung weist der Kältekreis der Wärmepumpenvorrichtung eine Einspritzleitung auf, die in Strömungsrichtung nach dem Absperrventil angeordnet ist. Auf diese Weise kann sich kein Fluid im Economiser ansammeln.

Gemäß einem weiteren Aspekt der Erfindung weist der Kältekreis der Wärmepumpenvorrichtung ein Ölausgleichsventil auf, welches zwischen der ersten Ölleitung und der zweiten Ölleitung angeordnet ist. Das Ölausgleichsventil ist geöffnet, falls der erste Kompressor betrieben wird. Somit sind die Komponenten Economiser und zweiter Kompressor der Kältemaschine auf dem Saugdruckniveau des ersten Kompressors vorgesehen. Ferner wird im Falle eines Ölausgleichs durch das Öffnen des Ölausgleichsventils sichergestellt, dass ein Ölausgleich zwischen dem ersten und zweiten Kompressor insbesondere während des Betriebes des ersten Kompressors erfolgen kann.

Gemäß, einem Aspekt der Erfindung weist die erste Umgehungsleitung und/oder die zweite Umgehungsleitung ein Rückschlagventil auf, welches derart schräg vorgesehen ist, dass auskondensiertes Fluid, wie Kältemittel oder Ol wieder in den durchströmten Bereich zurückfließen kann. Dabei ist das Rückschlagventil vorteilhaft schräg angeordnet, d.h. zur Horizontalen geneigt, um das Zurückfließen des auskondensierten Fluids in den durchströmten Bereich zu gewährleisten. Hierdurch kann ein Stauen oder Ansammeln von auskondensiertem Fluid vor dem Rückschlagventil vermieden werden.

Eine Umschaltung zwischen den Betriebsarten erfolgt vorzugsweise abhängig von der Außentemperatur und/oder einer eingestellten Heizkurve, wodurch sich eine Heizkreissolltemperatur ergibt. Somit erfolgt die Umschaltung zwischen den Betriebsarten insbesondere abhängig von der Heizkreissolltemperatur. Die zweite Betriebsart, der Einkompressorbetrieb und die dritte Betriebsart, der Parallelbetrieb, erfolgen vorzugsweise bei einer Außentemperatur von -5 bis 30 °C, insbesondere oberhalb von ca. 0 °C und/oder einer Vorlauftemperatur von ca. 15 bis 60 °C.

Auf die dritte Betriebsart wird geschaltet, wenn eine geforderte Heizleistung in der zweiten Betriebsart nicht erzielt werden kann. Eine hohe Heizleistung wird beispielsweise dann angefordert, wenn eine schnelle Aufheizung eines Warmwasserspeichers oder eines Gebäudes erfolgen soll. Auch bei einem Betrieb eines Warmwasserspeichers als Durchlauferhitzer, der mit der Wärmepumpenvorrichtung zur Warmwasserbereitung verbunden ist, ist es vorteilhaft, die Wärmepumpenvorrichtung in der dritten Betriebsart zu betreiben, insbesondere in einem Außentemperaturbereich oberhalb von -5 °C.

Die zweite Betriebsart, der Einkompressorbetrieb, wird vorteilhaft je nach Außentemperaturen bis zu einer Vorlauftemperatur von insbesondere bis zu ca. 60°C aktiviert. Sollte im zweiten Bertriebszustand die durch die Heizkurve geforderte Heizkreissolltemperatur nicht erreicht werden und somit die Heizleistung zu gering sein, wird die dritte Betriebsart, der Parallelbetrieb, aktiviert.

Im Parallelbetrieb addieren sich die Kältemittelmassenströme beider Kompressoren und die Kälteleistung des Verdampfers bzw. die elektrische Stromaufnahme steigt an.

Vom Vorteil ist der Parallelbetrieb bei Niedertemperatur-Heizungen bei denen dauerhaft niedrige Vorlauftemperaturen, im wesentlichen unterhalb von ca. 45 °C gefahren und hohe Heizleistungen benötigt werden, oder auch zum Aufheizen von großen Pufferspeichern, bei denen die Wärmepumpenvorrichtung zu Beginn der Aufheizung so lange mit geringer Vorlauftemperatur läuft, wie die Wassertemperatur im Speicher unterhalb einer Grenztemperatur von vorzugsweise ca. 60 °C, ca. 50 °C oder ca. 40 °C liegt.

Sollte die Heißgastemperatur des Kältemittels im Parallelbetrieb den Wert von 110°C oder das Druckverhältnis den Wert von 5 übersteigen, wird insbesondere durch öffnen des Absperrventils der Zweikompressor-Reihenbetrieb aktiviert.

Da die Kälteleistung bei hohen Vorlauftemperaturen und niedrigem Außentemperaturen geringer wird, muss mehr elektrische Aufnahmeleistung beim Reihenbetrieb zur Verfügung gestellt werden.

Ausführungsbeispiele und Vorteile der Erfindung werden nachstehend unter Bezugnahme auf folgende Figuren näher erläutert:
- Fig. 1: zeigt ein Blockschaltbild einer Wärmepumpenvorrichtung gemäß dem Stand der Technik, und
- Fig. 2: zeigt ein Blockschaltbild einer erfindungsgemäßen Wärmepumpenvorrichtung.
- Fig. 3: zeigt den Kältemittelmassenstrom im Serienbetrieb mit einem Hochdruckkompressor und einem Niederdruckkompressor.
- Fig. 4: zeigt den Kältemittelmassenstrom Parallelbetrieb mit zwei Kompressoren.
- Fig. 5: zeigt, den Kältemittelmassenstrom im Einkompressorbetrieb mit dem Niederdruckkompressor.
- Fig. 6: zeigt, den Kältemittelmassenstrom im Einkompressorbetrieb mit dem Hochdruckkommpressor.
- Fig. 7: zeigt ein Diagramm mit vorzugsweisen Betriebsbereichen eines Ausführungsbeispiels einer Luft-Wasser-Wärmepumpenvorrichtung

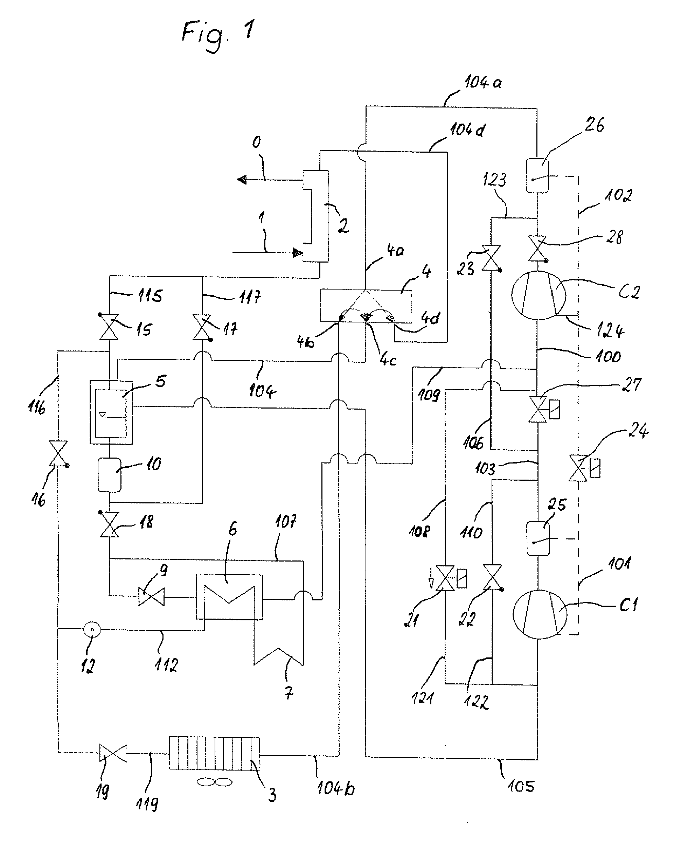

Fig. 1 zeigt ein Blockschaltbild einer Wärmepumpenvorrichtung gemäß dem Stand der Technik. Der Kältekreis der Wärmepumpenvorrichtung weist einen Kältekreislauf mit einem Kondensator 2, einem Verdampfer 3, einem Expansionsventil 19, das in der Strömungsrichtung vor dem Verdampfer 3 angeordnet ist und einem Kompressor C1 und einem zweiten Kompressor C2 auf. Der erste Kompressor C1 und der zweite Kompressor C2 sind durch ein Leitungssegment 100 und ein Rohr 103 in Reihe verbunden.

In der Strömungsrichtung des Fluids ist hinter dem ersten Kompressor C1 ein erster Ölabscheider 25 angeordnet und mit dem ersten Kompressor C1 über eine erste Ölleitung 101 verbunden, um abgeschiedenes Öl zu dem ersten Kompressor C1 zurückzuführen. Ebenfalls ist in der Strömungsrichtung hinter dem zweiten Kompressor C2 ein zweiter Ölabscheider 26 angeordnet und mit dem zweiten Kompressor C2 über eine zweite Ölleitung 102 verbunden, um abgeschiedenes Öl zu dem zweiten Kompressor C2 zurückzuführen. Die erste Ölleitung 101 und die zweite Ölleitung 102 sind über ein Ölausgleichsventil 24 miteinander verbunden.

Weiterhin ist vorteilhaft ein Sammler 11 und ein Abscheider 20 vorgesehen.

Der Kältekreis kann in einer Ein-Stufen-Kompression oder in einer Zwei-Stufen-Kompression betrieben werden. Hierzu werden entweder die beiden Kompressoren C1 und C2 hintereinander vom Fluid durchströmt oder es wird lediglich einer der beiden Kompressoren C1 oder C2 durchströmt und der andere Kompressor C1 oder C2 wird mittels einer entsprechenden ersten Umgehungsleitung 122 bzw. zweiten Umgehungsleitung 123 überbrückt. Auf diese Weise können der erste Kompressor C1 oder der zweite Kompressor C2 unabhängig voneinander betrieben werden. Diese Umgehungsleitungen 122, 123 weisen jeweils ein zugeordnetes Rückschlagventil 22, 23 auf.

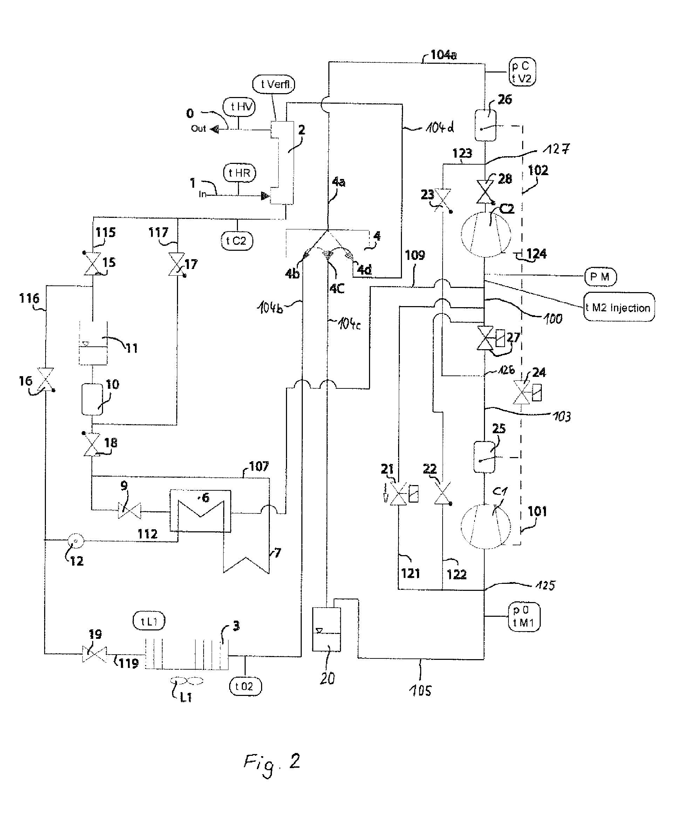

Fig. 2 zeigt ein Blockschaltbild einer erfindungsgemäßen Wärmepumpenvorrichtung. Diese Wärmepumpenvorrichtung basiert auf der Wärmepumpenvorrichtung gemäß Fig. 1. Erfindungsgemäß ist in dem Blockschaltbild der Fig. 2 die erste Umgehungsleitung 122 an die die Zuleitung 100 zwischen dem Absperrventil 27 und dem zweiten Kompressor C2 angeschlossen.

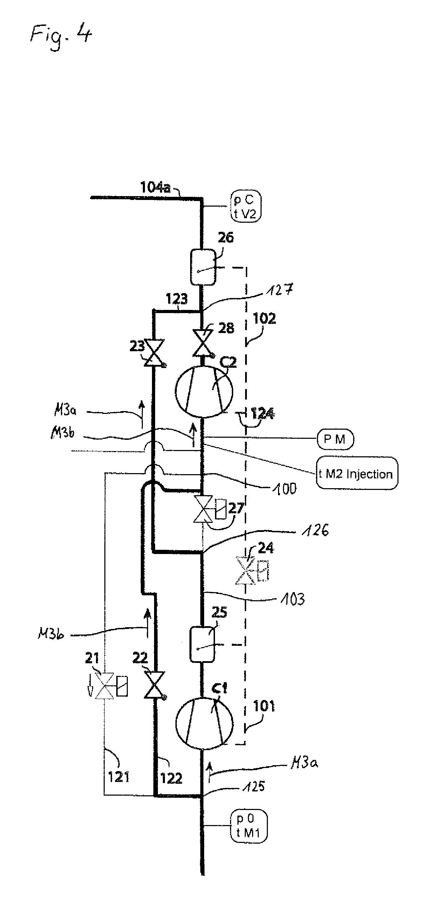

In einem vorteilhaften erfindungsgemäßem Parallelbetrieb des ersten Kompressors C1 und des zweiten Kompressors C2 gemäß Fig. 4 ist das Absperrventil 27 geschlossen und der Kältemittelmassenstrom wird an einem ersten Abzweig 125 geteilt. Der Kompressor C1 saugt einen ersten Kältemittelmassenteilstrom M3a an, der durch den ersten Kompressor C1 gefördert und verdichtet wird. Weiter wird der erste Kältemittelmassenteilstrom M3a an einem zweiten Abzweig 126 in die Leitung 123 geführt und strömt parallel zu einem zweiten Kältemittelmassenstrom M3b am zweiten Kompressor C2 vorbei zu einem dritten Abzweig 127 in eine Leitung 104a, wo sich der erste Kältemittelmassenstrom M3a mit dem zweiten Kältemittelmassenstrom M3b wieder vereinigt.

In Fig. 4 wird der zweite Kältemittelmassenstrom M3b ebenfalls am ersten Abzweig 125 abgeteilt und strömt dann durch die erste Umgehungsleitung 122. Der zweite Kältemittelmassenstrom M3b wird hinter dem im Parallelbetrieb abgesperrten Absperrventil 27 dem zweiten Kompressor C2 zugeführt oder vom zweiten Kompressor C2 angesaugt und in diesem auf etwa den gleichen Druck verdichtet wie der erste Kältemittelmassenstrom M3a im ersten Kompressor C1 verdichtet wird. Der verdichtete zweite Kältemittelmassenstrom M3b gelangt dann in die Leitung 104a, wo er sich mit dem erstem Kältemittelmassenstrom M3a auf einem etwa gleichen Druckniveau vereinigt.

Mit der erfindungsgemäßen Vorrichtung wird abhängig von Parametern eine Umschaltung zwischen dem Serienbetrieb, dem Parallelbetrieb und dem Einkompressorbetrieb durchgeführt.

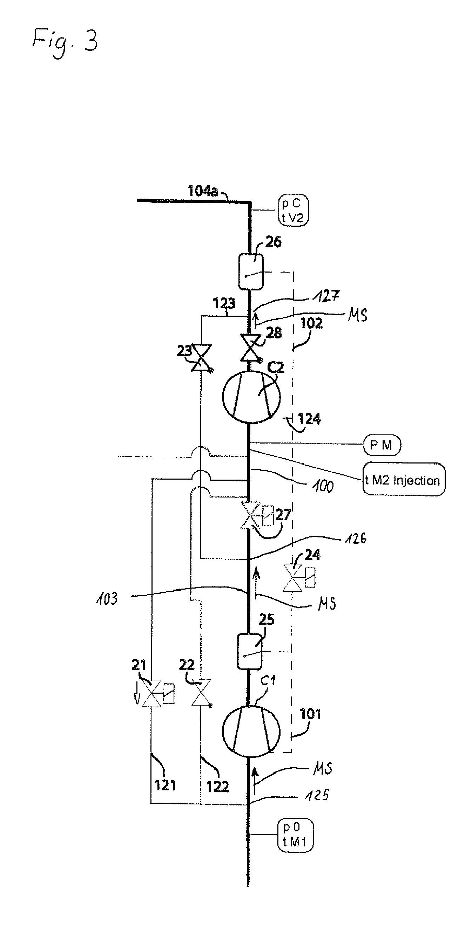

In einem Serienbetrieb gemäß Fig. 3 ist das Absperrventil 27 offen und beide Kompressoren sind in Betrieb. Es strömt nur ein Kältemittelmassenstrom MS durch den ersten und den zweiten Kompressor C1 und C2. Die erste Umgehungsleitung 122 und die zweite Umgehungsleitung sind geschlossen und werden nicht durchströmt.

Im erfindungsgemäßen Einkompressorbetrieb gemäß Betriebsart B2 ist das Absperrventil 27 immer geschlossen und nur durch den Betrieb des ersten oder zweiten Kompressors ist der Einkompressorbetrieb definiert, also welcher Kompressor Kältemittel ansaugt.

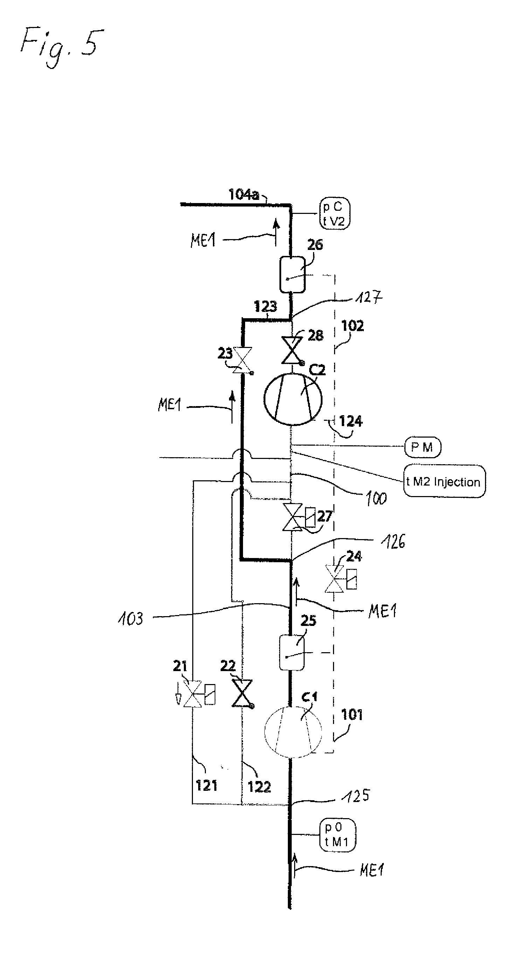

Im Einkompressorbetrieb gemäß Fig. 5 mit dem Niederdruckkompressor der Wärmepumpenvorrichtung, die für eine Zweistufenkompression ausgelegt ist, also dem ersten Kompressor C1 strömt ein Kältemittelmassenstrom ME1 durch den ersten Kompressor C1 und wird dort verdichtet. Da das Absperrventil 27 vorteilhaft geschlossen ist, kann kein Kältemittel von der Hochdruckseite des ersten Kompressors C1 in die erste Umgehungsleitung 122 strömen, sondern es strömt in die zweite Umgehungsleitung 123 und am außer Betrieb befindlichen zweiten Kompressor C2 vorbei in die Leitung 104a.

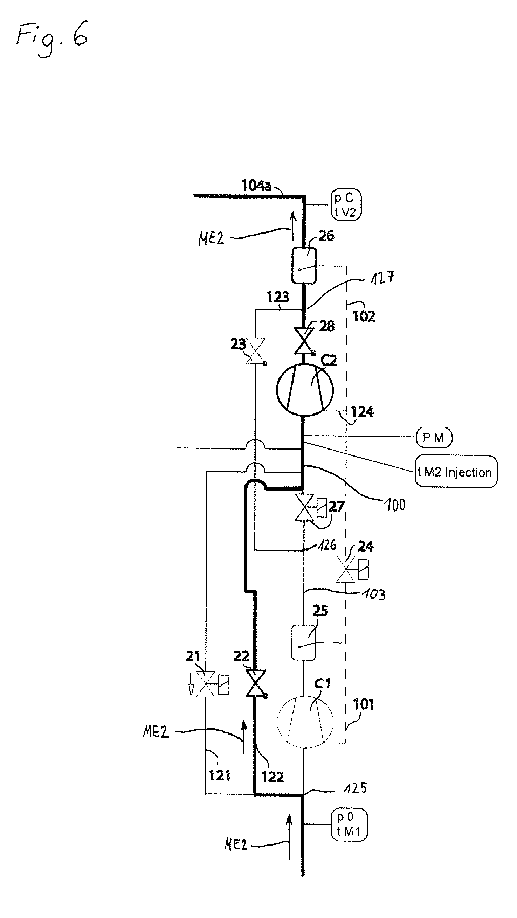

Im Einkompressorbetrieb gemäß Fig.6 mit dem Hochdruckkompressor C2 der Wärmepumpenvorrichtung, die für eine Zweistufenkompression ausgelegt ist, strömt ein Kältemittelmassenstrom ME2 durch den zweiten Kompressor C2 und wird dort verdichtet. Der erste Kompressor C1 steht still und das gesamte Kältemittel strömt nur durch den zweiten Kompressor C2. Vorher strömt es durch die offene erste Umgehungsleitung 122 und gelangt erfindungsgemäß hinter dem Absperrventil 27 in die Leitung 100 und wird der Niederdruckseite des Hochdruckkompressors, also dem zweiten Kompressor C2 zugeführt.

Das Absperrventil 27 ist bevorzugt als Servo-Absperrventil 27 ausgebildet. Dieses Absperrventil 27 ist so in der Zuleitung 100 bzw. 103 angeordnet, dass das Absperrventil 27 gemeinsam mit dem zweiten Kompressor C2 durch die Umgehungsleitung 123 überbrückt wird. Auf diese Weise kann der zweite Kompressor C2 durch das Schließen des Absperrventils 27 für den Betrieb der Kältemaschine in der Ein-Stufen-Kompression mittels des ersten Kompressors C1 überbrückt werden, ohne dass ein Teil des aus dem ersten Kompressor C1 herausströmenden Fluids in den zweiten Kompressor C2 gedrückt wird.

Der zweite Ölabscheider 26 ist so angeordnet, dass die zweite Umgehungsleitung 123 zwischen dem Ausgang des zweiten Kompressors C2 und dem Eingang des zweiten Ölabscheiders 26 einmündet. Auf diese Weise wird der zweite Ölabscheider 26 sowohl bei der Zwei-Stufen-Kompression als auch bei beiden Betriebsweisen der Ein-Stufen-Kompression vorzugsweise stets vom Fluid durchströmt.

Zwischen der Einmündung der zweiten Umgehungsleitung 123 und dem Ausgang des zweiten Kompressors C2 ist ein Rückschlagventil 28 vorgesehen, um ein Rückströmen von Fluid in den zweiten Kompressor C2 zu verhindern, falls in der Ein-Stufen-Kompression der zweite Kompressor C2 nicht betrieben wird.

Das Ölausgleichsventil 24 ist zwischen der ersten Ölleitung 101 und der zweiten Ölleitung 102 in der Ein-Stufen-Kompression mittels des ersten Kompressors C1 geöffnet, um einen Ölausgleich zwischen dem ersten Kompressor C1 und dem zweiten Kompressor C2 zu ermöglichen. Ferner wird in einem Ausführungsbeispiel im Betrieb der Ein-Stufen-Kompression mittels des ersten Kompressors C1 durch das Öffnen des Ölausgleichsventil 24 die Umgehungsleitung 124 mit dem Kompressor C2 und die Einspritzleitung 109 über den Zwischenkühler 6 (Economiser) auf ein Saugdruckniveau gebracht.

In einer vorteilhaften Ausgestaltung der Erfindung ist weiterhin gezeigt, dass ein Vorlauf 0 und ein Rücklauf 1 am Kondensator 2 angeschlossen sind. Vorteilhaft ist weiterhin die Verwendung eines 4/2-Wegeventils 4, welches eine erste Verbindung 4a aufweist, die mit einer Heißgasleitung 104a verbunden ist. Eine zweite Verbindung 4b ist mit einer Austrittsleitung 104b des Verdampfers verbunden. Eine dritte Verbindung 4c ist mit einer Verbindungsleitung 104c verbunden, und eine vierte Verbindung 4d des 4/2-Wegeventils 4 ist mit einer Verbindungsleitung 104d verbunden. Weiterhin ist ein Abscheider-Sammler 5 vorgesehen. Eine Abtauschlange 7, an die auch ein Leitungssegment 107 angeschlossen ist, ist vorteilhaft vor dem Zwischenkühler 6 angebracht. Weiterhin sind ein Expansionsventil 9, ein Filtertrockner 10 und ein Schauglas 12 vorgesehen. Zur Schaltung der Strömungsrichtung sind an verschiedenen Stellen Rückschlagventile 15, 16, 17, 18 angebracht, die hauptsächlich für die Umschaltung zwischen Heizbetrieb und Abtaubetrieb verwendet werden. Weiterhin ist ein Expansionsventil 19 vorgesehen, mit welchem der Zustand des Kältemittels im Verdampfer geregelt wird. Die Rückschlagventile 22 und 23 sind in den Bypassleitungen 123 und 122 zur Schaltung der Strömungsrichtung vorgesehen. Mit dem Druckausgleichsventil 21 wird insbesondere der Druck in den beiden Ölsümpfen des Kompressors C1 und C2 ausgeglichen oder teilweise ausgeglichen. Die Leitung 122 ist als Druckausgleichsleitung hinter dem Absperrventil 27 angeschlossen. Weiterhin ist ein Leitungssegment 103 vorgesehen. An das Leitungssegment 103 sind die Bypassleitungen 123,122 und die Einspritzleitung 109 angeschlossen. Die Saugleitung 105 ist vorteilhaft vom Abscheider-Sammler 5 zum Kompressor C1 geführt. Desweiteren sind die Leitungen 112, 115, 116, 117, 119, 121 und 122 vorgesehen.

Dem zweiten Kompressor ist ein Rückschlagventil 28 in Strömungsrichtung nachgeschaitet.

Die zweite Umgehungsleitung 123 des zweiten Kompressors C2 ist derart angeordnet, dass der erste Ölabscheider 25 und der zweite Ölabscheider 26 in Reihe geschaltet sind, falls der erste Kompressor C1 betrieben wird.

Die Einspritzleitung 109 ist in Strömungsrichtung nach dem Absperrventil 27 angeordnet.

Es ist ein Ölausgleichsventil 24 zwischen der ersten Ölleitung 101 und der zweiten Ölleitung 102 angeordnet, wobei das Ölausgleichsventil 24 vorteilhaft geöffnet ist, falls der erste Kompressor C1 betrieben wird.

Die Wärmepumpenvorrichtung gemäß Ausführungsbeispiel ist mit einem Ölausgleichsventil 24, welches zwischen der ersten Ölleitung 101 und der zweiten Ölleitung 102 angeordnet ist ausgestattet, wobei im Betrieb der Ein-Stufen-Kompression mittels des ersten Kompressors C1 durch das Öffnen des Ölausgleichsventil 24 die Umgehungsleitung 124 mit den Kompressor C2 und die Einspritzleitung 109 über den Zwischenkühler 6 (Economiser) auf Saugdruckniveau gebracht sind.

Die erste Umgehungsleitung 122 und/oder die zweite Umgehungsleitung 123 weisen ein Rückschlagventil 21, 22 auf, welches vorteilhaft derart schräg vorgesehen ist, dass auskondensiertes Fluid wieder in den durchströmten Bereich zurückfließen kann.

Im Kältemittelkreislauf der Wärmepumpenvorrichtung ist in der Heißgasleitung 104a ein Hochdrucksensor und/oder ein Heißgastemperaturfühler pC, tV2 angeschlossen. Vor dem zweiten Kompressor C2 ist ein Mitteldrucksensor PM und/oder ein Sauggasfühler tM2 Injection für den Hochdruckverdichter, also den zweiten Kompressor, zu C2 vorgesehen. Ein Niederdrucksensor p0 und oder Sauggasfühler tM1 ist für den ersten Kompressor C1, der insbesondere als Niederdruckverdichter arbeitet, vorgesehen. In der zweiten Verbindung 4b mit dem Verdampfer 3, ist ein Verdampferaustrittsfühler t02 vorgesehen. Ein Lufteintrittsfühler tL1 ist in Luftströmungsrichtung vor dem Verdampfer 3 angeordnet. Hinter dem Verflüssiger 2 ist in Strömungsrichtung des Kältemittels ein Verflüssigeraustrittstemperaturfühler tC2 angeordnet. Der Kondensator 2 verfügt weiterhin über einen Frostschutzfühler tVerfl. Desweiteren ist im Vorlauf 0 ein Vorlauffühler tHV und im Rücklauf 1 ein Rücklauffühler tHR angeordnet. Luft wird als Wärmequelle mit einem Lüfter L1 durch den Verdampfer 3 gesaugt.

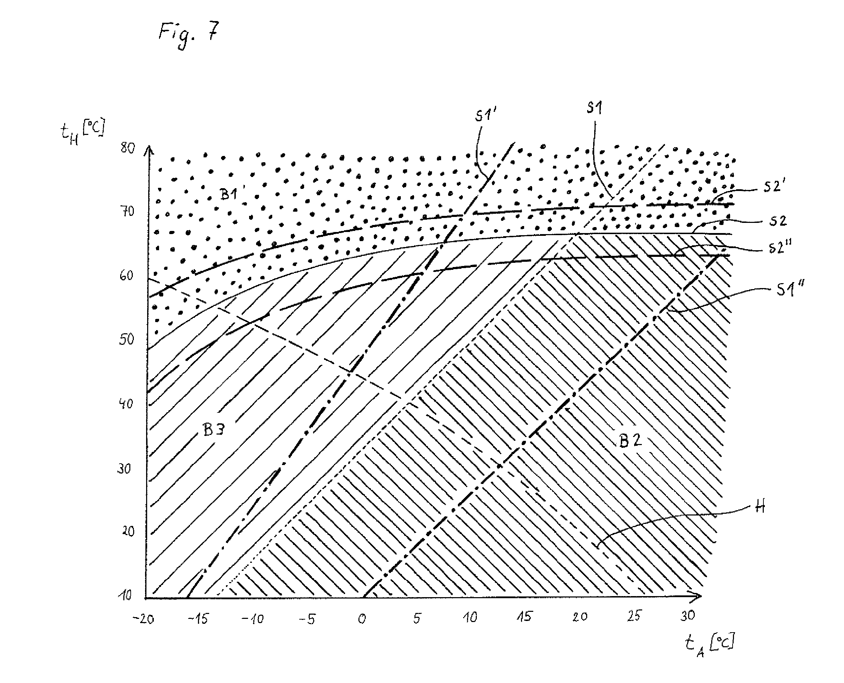

Im Diagramm gemäß Fig. 7 sind drei Bereiche der vorzugsweisen Betriebsarten B1, B2, B3 gezeigt. Bei geforderten Temperaturen des Heizmediums von über insbesondere ca. 60 °C wird auf die erste Betriebsart B1, den Serienbetrieb der wenigstens beiden Kompressoren C1, C2 umgeschaltet. Bei niedrigen Außentemperaturen unterhalb von vorzugsweise ca. - 10 °C kann auch schon bei Temperaturen des Heizmediums von unter 60°C, vorzugsweise zwischen etwa 50 °C und 60 °C die erste Betriebsart B1 verwendet werden. Dies ist durch die Linie S2 gekennzeichnet.

Unterhalb der Linie S2 werden die zweite oder die dritte Betriebsart B2, B3 vom Regler vorgegeben. Dargestellt ist die Grenze zwischen der dritten und der zweiten Betriebsart B2, B3 durch eine Grenzzone, die durch die Linien S1' und S1" gebildet ist und in der vorteilhaft eine Trennlinie S1 liegt. Die Grenzzone zwischen S1' und S1" stellt einen gerätespezifischen Bereich dar, in dem eine Umschaltung zwischen der zweiten und der dritten Betriebsart B2, B3 vorteilhaft ist.

Die Trennlinie S1 stellt eine Umschaltlinie dar und diese Trennlinie S1 befindet sich vorteilhaft in der Grenzzone zwischen den Linien S1' und S1" und ist vorteilhaft veränderbar im Regler abgespeichert. Abhängig von den Daten und Temperaturen, die der Regler erhält wird die Trennlinie S1 und/oder auch die Linie S2 verschoben. Auch für die Linie S2 kann ein Bereich S2' und S2" vorgesehen sein, in dem der Regler sie verschieben kann. Im Ausführungsbeispiel ist eine Heizkurve H abhängig von der Heizmediumsolltemperatur t_{H} und der Außentemperatur t_{A} oder t_{At} vorgegeben.

## Patentansprüche

1. Verfahren zum Betrieb einer Wärmepumpenvorrichtung, mit einer Umschaltung von Betriebsarten (B1, B2),
mit der ersten Betriebsart (B1), in der ein erster drehzahlvariabler Kompressor (C1) mit einem zweiten drehzahlvariablen Kompressor (C2) in einer Zwei-Stufen-Kompression in Serie arbeiten, wobei ein Massenstrom (M1) des Kältemittels durch beide Kompressoren (C1, C2) erfolgt,
mit der zweiten Betriebsart (B2) in der der drehzahlvariabler Kompressor (C1, C2) in einer einstufigen Kompression unabhängig betrieben wird, wobei der nicht betriebene drehzahlvariable Kompressor (C1, C2) über eine Umgehungsleitung (122, 123) überbrückt wird, wobei ein Massenstrom (M2) des Kältemittels in der zweiten Betriebsart (B2) nur durch den mit einer Mindestdrehzahl (nmin) im Betrieb befindlichen Kompressor (C1, C2) erfolgt
enthaltend die Verfahrensschritte,
dass in einer dritten Betriebsart (B3) die beiden drehzahlvariablen Kompressoren (C1, C2) in einem Parallelbetrieb beide wenigstens mit einer Mindestdrehzahl (nmin1 oder nmin2) laufen, wobei ein Kältemittelmassenstrom in zwei Massenströme (M3a, M3b) aufgeteilt ist,
wobei der Massenstrom (M3a) durch den ersten drehzahlvariablen Kompressor (C1) erfolgt, der mit einer Drehzahl (nC1) betrieben wird und der Massenstrom (M3b) durch den zweiten drehzahlvariablen Kompressor (C12) erfolgt, der mit einer Drehzahl (nC2) betrieben wird,
so dass eine vorgegebene Leistung im Parallelbetrieb der drehzahlvariablen Kompressoren (C1, C2) erreicht wird.

2. Verfahren nach Anspruch 1,
enthaltend den Verfahrensschritt, dass zur Umschaltung auf den Parallelbetrieb die direkte Strömungsverbindung (100) zwischen dem ersten drehzahlvariablen Kompressor (C1) und dem zweiten drehzahlvariablen Kompressor (C2) mit einer Absperrung (27) unterbrochen wird,
eine zweite Strömungsverbindung durch die erste Umgehungsleitung (122), die dann offen ist, von einer Saugleitung (105) zum zweiten drehzahlgeregelten Kompressor (C2) für einen Massenstrom (M3b) von Kältemittel hergestellt ist und im Parallelbetrieb der drehzahlvariable erste Kompressor und der zweite drehzahlvariable Kompressor (C2) in Betrieb sind.

3. Verfahren nach Anspruch 2,
enthaltend den Verfahrensschritt, dass im Parallelbetrieb der gesamte Kältemittelmassenstrom zum ersten und zum zweiten Kompressor aufgeteilt wird, der Massenstrom (M3a) durch den ersten Kompressor (C1) erfolgt, der Massenstrom (M3b) am ersten Kompressor (C1) vorbei erfolgt, der Massenstrom (M3b) zum zweiten Kompressor (C2) erfolgt und der Massenstrom (M3a) am zweiten Kompressor vorbei erfolgt.

4. Verfahren nach einem der vorhergehenden Ansprüche 2 oder 3,
enthaltend den Verfahrensschritt, dass die Drehzahlen (nc1) und (nc2) unterschiedlich sind, in einem eingefahrenen Betrieb eine zumindest minimale Drehzahlabweichung der Drehzahlen (nc1) und (nc2) vom Regler vorgegeben ist und die Drehzahlabweichung vorzugsweise mindestens ca. 0,1 - 10 Hz, insbesondere ca.1 Hz beträgt.

5. Verfahren nach einem der vorhergehenden Ansprüche,
enthaltend den Verfahrensschritt, dass eine Umschaltung zwischen den Betriebsarten (B1, B2, B3) also zwischen dem Serienbetrieb, dem Einkompressorbetrieb und dem Parallelbetrieb vorgesehen ist, wobei eine Umschaltung vom Einkompressorbetrieb auf den Parallelbetrieb spätestens dann erfolgt wenn eine Heizleistung oder Temperatur angefordert wird, die höher ist, als sie ein Kompressor leisten kann und eine Umschaltung vom Parallelbetrieb auf den Serienbetrieb spätestens dann erfolgt, wenn die vom Regler angeforderte Temperatur eine maximal im Parallelbetrieb erreichbare Temperatur überschreitet.

6. Verfahren nach Anspruch 5,
enthaltend den Verfahrensschritt, dass eine Rückschaltung vom Serienbetrieb auf den Parallelbetrieb, vom Serienbetrieb auf den Einzelbetrieb oder vom Parallelbetrieb auf den Einzelbetrieb erfolgt, wenn die angeforderte Temperatur unter einer maximal im Parallelbetrieb oder im Einzelbetrieb erreichbare Temperatur oder Heizleistung liegt.

7. Verfahren nach Anspruch 5 oder 6,
enthaltend den Verfahrensschritt, dass die Temperatur eine Heißgastemperatur, eine aus einem Hochdruck ermittelte Heißgastemperatur des Kältemittels in Strömungsrichtung hinter dem ersten drehzahlvariablen Kompressor (C1) oder dem zweiten drehzahlvariablen Kompressor (C2) und/oder eine Temperatur eines Heizmediums der Wärmepumpe ist.

8. Verfahren nach einem der vorhergehenden Ansprüche,
enthaltend den Verfahrensschritt, dass der erste drehzahlvariable Kompressor (C1) von wenigstens einem ihm zugehörigen ersten Parameter (t1, p2) der Wärmepumpe abhängig in der Drehzahl gesteuert wird, der zweite drehzahlvariable Kompressor (C2) von wenigstens einem ihm zugehörigen zweiten Parameter (t2, p2) der Wärmepumpe abhängig in der Drehzahl gesteuert wird oder der erste und der zweite drehzahlvariablen Kompressor (C1, C2) nur oder zusätzlich von wenigstens einem gemeinsamen Parameter (xg) der Wärmepumpe abhängig in der Drehzahl gesteuert werden.

9. Verfahren nach einem der vorhergehenden Ansprüche,
enthaltend den Verfahrensschritt, dass im Parallelbetrieb die Summe der Massenströme (M3a, M3b) durch den Verdampfer in der dritten Betriebsart (B3) größer ist als der Massenstrom (M2) in der Betriebsart (B2) und die Summe der Massenströme (M3a, M3b) durch den Verdampfer in der dritten Betriebsart (B3) größer ist als der Massenstrom (M1) in der Betriebsart (B1) wobei die Heizleistung der Wärmepumpenvorrichtung in der dritten Betriebsart höher ist als in der ersten oder zweiten Betriebsart (B1, B2), nur in der ersten Betriebsart (B1) ein höchste maximal Temperatur erreichbar ist, die in der zweiten oder dritten Betriebsart unter gleichen Bedingungen nicht erreichbar ist, die höchst erreichbare Temperatur eines vorlaufenden Mediums insbesondere ca. 70 °C bis 80 °C beträgt.

10. Wärmepumpenvorrichtung insbesondere arbeitend nach einem Verfahren der Ansprüche 1 bis 9 mit
einem Kältekreis,
einem ersten drehzahlvariablen Kompressor (C1) und einem zweiten drehzahlvariablen Kompressor (C2), die durch ein direktes Leitungssegment (100) derart in Reihe verbunden sind, dass die Kompression eine Zwei-Stufen-Kompression ist, falls der erste drehzahlvariable Kompressor (C1) und der zweite drehzahlvariable Kompressor (C2) in Serie betrieben werden,
einem Kondensator (2),
einem Verdampfer (3),
einem Expansionsventil (19), das in der Strömungsrichtung vor dem Verdampfer (3) angeordnet ist,
einem ersten Ölabscheider (25), der in Strömungsrichtung hinter dem ersten drehzahlvariablen Kompressor (C1) angeordnet und mit dem ersten Kompressor (C1) über eine erste Ölleitung (101) verbunden ist, um abgeschiedenes Öl zu dem ersten Kompressor (C1) zurückzuführen,
einem zweiten Ölabscheider (26), der in Strömungsrichtung hinter dem zweiten Kompressor (C2) angeordnet und mit dem zweiten drehzahlvariablen Kompressor (C2) über eine zweite Ölleitung (102) verbunden ist, um abgeschiedenes Öl zu dem zweiten Kompressor (C2) zurückzuführen,
wobei wenigstens der erste drehzahlvariable Kompressor (C1) oder der zweite drehzahlvariable Kompressor (C2) unabhängig betrieben werden kann,
wobei der nicht betriebene erste drehzahlvariable Kompressor (C1) oder der nicht betriebene zweite drehzahlvariable Kompressor (C2) durch eine erste Umgehungsleitung (122) oder eine zweite Umgehungsleitung (123) überbrückt werden kann, wobei dem zweiten Kompressor (C2) ein Absperrventil (27) in Strömungsrichtung in der direkten Leitung 100 vorgeschaltet ist und die erste Umgehungsleitung (122) zwischen dem Absperrventil (27) und dem zweiten drehzahlvariablen Kompressor (C2) angeschlossen ist.
